# EUROPÄISCHE PATENTSCHRIFT

(11) **EP 3 904 827 B1**
(45) Veröffentlichungstag und Bekanntmachung des Hinweises auf die Patenterteilung: **07.05.2025**
(21) Anmeldenummer: 21166134.3
(22) Anmeldetag: 31.03.2021
(51) Int. Cl.: G01C 11/06, G01C 21/20, G05D 1/00, B61L 23/04, B61L 27/53

(54) **DYNAMISCHE ROUTENPLANUNG EINER DROHNENBASIERTEN ÜBERPRÜFUNG VON STRECKENEINRICHTUNGEN EINER STRECKE**
DYNAMIC ROUTE PLANNING OF A DRONE-BASED INSPECTION OF ROUTE EQUIPMENT OF A ROUTE
PLANIFICATION DYNAMIQUE D'ITINÉRAIRE D'UNE VÉRIFICATION D'INFRASTRUCTURES D'UNE VOIE À L'AIDE DE DRONES

(30) Priorität: 30.04.2020 DE 102020205552
(43) Veröffentlichungstag der Anmeldung: 03.11.2021
(73) Patentinhaber: Siemens Mobility GmbH, 81739 München (DE)
(72) Erfinder: Engel, Carsten, 10319 Berlin (DE); Gruber, Laura, 38106 Braunschweig (DE); Kluckner, Stefan, 12487 Berlin (DE); Li, Haiyan, 10117 Berlin (DE); Mirtschin, Karsten, 15711 Zeesen (DE); Tölg, Tobias, 14542 Werder (DE); Worm, Katja, 10439 Berlin (DE)
(74) Vertreter: Siemens Patent Attorneys

(56) Entgegenhaltungen:
- WO-A1-2019/040722
- WO-A2-2016/053438
- DE-A1- 102016 201 159
- KOPP?NY M?TH? ET AL: "Vision and Control for UAVs: A Survey of General Methods andof Inexpensive Platforms for Infrastructure Inspection", SENSORS, vol. 15, no. 7, 25 June 2015 (2015-06-25), CH, pages 14887 - 14916, XP055428283, ISSN: 1424-8220, DOI: 10.3390/s150714887
- JORDAN SOPHIE ET AL: "State-of-the-art technologies for UAV inspections", IET RADAR SONAR NAVIGATION, THE INSTITUTION OF ENGINEERING AND TECHNOLOGY, UK, vol. 12, no. 2, 1 February 2018 (2018-02-01), pages 151 - 164, XP006065482, ISSN: 1751-8784, DOI: 10.1049/IET-RSN.2017.0251

## Beschreibung

Die Erfindung betrifft ein Verfahren zur Überprüfung von vorgegebenen Streckeneinrichtungen einer Strecke mittels Bildaufnahmen einer Drohne, sowie ein Computerprogrammprodukt zur Ausführung des Verfahrens und ein Datenträger mit dem Computerprogrammprodukt.

Bauwerke der Eisenbahninfrastruktur, beispielsweise Oberleitungen oder deren Einrichtungen, wie Isolatoren, Gewichte oder Kettenwerke, aber auch Brücken oder in die Strecke ragende Vegetation müssen regelmäßig einer Sichtprüfung unterzogen werden. Die visuelle Inspektion erfolgt üblicherweise manuell. Wartungsmitarbeiter laufen die Strecke ab oder bewegen sich mit einem Zweiwegefahrzeug. Die betreffenden Streckeneinrichtungen werden mit Fernglas oder dem bloßen Auge begutachtet. Dies ist mühsam, aufwendig und die Qualität der Dokumentation ist stark vom jeweiligen Mitarbeiter abhängig. Zudem erfordert dieses Vorgehen einen großen Aufwand zur Festlegung und Verifizierung der Schäden und der Positionen. Um Einschränkungen im regulären Betrieb zu vermeiden, werden diese Arbeiten oft als Wochenendarbeit oder in Nachtschichten meistens zusammen mit Streckensperrungen ausgeführt und sind daher personal-, zeit- und kostenintensiv. Ferner sind hier mögliche Fehlerquellen begründet, die sich auf die finale Aussage zum Ergreifen von Maßnahmen auswirken und dazu führen können, dass die falschen Isolatoren ausgetauscht werden und somit ein weiteres Risiko für den ordnungsmäßigen Betrieb der Bahnanlage besteht.

Betriebsrelevante Streckeneinrichtungen wie Isolatoren werden üblicherweise zyklisch zur Risikominimierung ausgetauscht, wodurch sich die Lebensdauer jedoch stärker als nötig reduziert.

Die Aufsätze "Vision and Control for UAVs: A Survey of General Methods andof lnexpensive Platforms for lnfrastructure lnspection" von Koppany Mathe et al. erschienen in SENSORS, Bd. 15, Nr. 7, 25. Juni 2015 (2015-06-25), Seiten 14887-14916, und JORDAN SOPHIE ET AL: "State-ofthe-art technologies for UAV inspections" IET RADAR SONAR NAVIGATION, THE INSTITUTION OF ENGINEERING AND TECHNOLOGY, UK, Bd. 12, Nr. 2, 1. Februar 2018 (2018-02-01), Seiten 151-164, offenbaren gattungsgemäße Verfahren zur Überprüfung von vorgegebenen Streckeneinrichtungen einer Strecke mittels Bildaufnahmen einer Drohne.

Die Offenlegungsschrift DE 10 2016 201159 A1 betrifft ein Verfahren zur automatisierten Untersuchung von Infrastrukturelementen eines Eisenbahnnetzes. Die WO 2019/040722 A1 offenbart ebenfalls ein gattungsgemäßes Verfahren zur Überprüfung von Infrastruktureinrichtungen mittels Drohnen.

Die Druckschrift WO 2016/053438 A2 lehrt ein Verfahren gemäß dem Oberbegriff des unabhängigen Patentanspruchs 1.

Der Erfindung liegt die Aufgabe zugrunde, die Überprüfung der Streckeneinrichtungen zu verbessern.

Gelöst wird die Aufgabe durch die Gegenstände der unabhängigen Patentansprüche 1, 5 und 6. Weiterbildungen und Ausgestaltungen der Erfindung finden sich in den Merkmalen der abhängigen Patentansprüche wieder.

Ein erfindungsgemäßes Verfahren zur Überprüfung von vorgegebenen Streckeneinrichtungen einer Strecke mittels Bildaufnahmen einer Drohne umfasst wenigstens alle Verfahrensschritte gemäß Anspruch 1.

Daneben umfasst die Erfindung ein Computerprogrammprodukt umfassend Befehle, die bei der Ausführung des Programms durch ein geeignetes mobiles Endgerät dieses veranlassen, das erfindungsgemäße Verfahren auszuführen, sowie einen Datenträger, auf dem das Computerprogrammprodukt gespeichert ist. Das Verfahren, insbesondere zumindest die Verfahrensschritte d. und e. können in einer, beispielsweise ortsfesten, zentralen Auswerteeinrichtung ausgeführt werden. Diese ist entsprechend geeignet ausgebildet zur Ausführung des Verfahrens, insbesondere zur Ausführung des Computerprogrammprodukts, und umfasst eine geeignete Recheneinheit.

Das Verfahren dient zur automatischen bzw. automatisierten visuellen Überprüfung der Streckeneinrichtungen. Wird es regelmäßig durchgeführt, können die Strecke und die entsprechenden Streckeneinrichtungen mit dem Verfahren überwacht werden. Als Drohne wird weitergebildet ein unbemanntes Luftfahrzeug eingesetzt, beispielsweise ein Multikopter. Die Drohne ist dabei mit geeignet ausgebildeter Sensorik zur Erfassung der genannten Daten, insbesondere zumindest zur Erfassung der Bildaufnahmen, der Positionen, sowie der Ausrichtungs- und Aufnahmeparameter, ausgestattet. Sie umfasst insbesondere wenigstens eine hochauflösende Kamera zur Aufzeichnung von Bild- und Videomaterial aus unterschiedlichen Ansichten auf die zu überprüfenden Streckeneinrichtungen. Das hochauflösende Kamerasystem ist geeignet zur Bildaufnahme mit mindestens 8 Megapixeln, insbesondere mindestens 32 Megapixeln. Es kann auch eine 4K-Videofunktion aufweisen. Zudem kann sie einen GNSS-Empfänger (GNSS steht für "global navigation satellite system") und/oder eine Inertiale Messeinheit (IMU - inertial measurement unit) mit Beschleunigungssensoren und Drehratensensoren und/oder Gyroskop umfassen. Durch eine Zuordnung von hochgenauen Positions- und Ausrichtungsdaten zu den jeweiligen Einzelbildern kann später eine Georeferenzierung von erkannten Objekten erfolgen. Je höher die Bildauflösung des Kamerasystems, also je mehr Pixel sie erfasst, desto höher ist die Objektauflösung und desto höher kann der Abstand der Drohne zur vorgegebenen, zu überprüfenden Streckeneinrichtung sein. Damit sind auch Flüge gegebenenfalls während des Betriebs aus größerer Distanz möglich. Bei Videoaufnahmen lassen sich, beispielsweise mittels sogenanntem Super-Resolution-Verfahren, mehrere Einzelbilder des Videos zu einem Gesamtbild höherer Auflösung kombinieren, um die tatsächliche Auflösung nach Kompression der ursprünglichen Eingangsbilddaten zu verbessern und detailliertere Strukturen erkennen zu können.

Die Drohne wird entlang einer vorgegebenen Route, insbesondere entlang der Strecke bewegt. Ist die Drohne ein unbemanntes Luftfahrzeug kann von einer Befliegung gesprochen werden. Die Route ist als Trajektorie, auch Bahnkurve genannt, mit mehreren, anzusteuernden Wegpunkten vorgegeben.

Ist die Drohne an den anzusteuernden Wegpunkten, den vorgegebenen Positionen zur Aufnahme von Bildaufnahme von zu überprüfenden Streckeneinrichtungen angekommen, wird sie und/oder die Kamera der Drohne zu den zu überprüfenden Streckeneinrichtungen entsprechend ausgerichtet und Bildaufnahmen von den zu überprüfenden Streckeneinrichtungen aufgenommen. Dies erfolgt unter vorgegebenen Aufnahmeparametern, wie zum Beispiel eine Blendenzahl oder eine Brennweite. Die erfassten Daten, die Bildaufnahmen, die Positionsdaten, sowie die Ausrichtungs- und Aufnahmeparameter werden zusammen, insbesondere auch zusammen mit Datum- und Zeitangaben, zur späteren Auswertung gespeichert, insbesondere in einem Datensatz.

Diese Daten können zu der zentralen Auswerteeinrichtung übermittelt werden, beispielsweise mittels drahtloser Kommunikationstechnik, oder sie werden nach Rückkehr der Drohne zur zentralen Auswerteeinrichtung aus dem Speicher der Drohne ausgelesen. Die Auswertung der gespeicherten Daten findet insbesondere in der zentralen Auswerteeinrichtung statt. Sie umfasst zunächst das Auslesen der gespeicherten Daten, zumindest der gespeicherten Bildaufnahmen, der Positionsdaten sowie der Ausrichtungs- und Aufnahmeparameter. Anschließend wird eine Objekterkennung durchgeführt. Hierzu werden weitergebildet Verfahren der künstlichen Intelligenz eingesetzt, beispielsweise sogenannte neuronale Netze.

Entsprechende Verfahren zur Mustererkennung und gegebenenfalls zur Musteranalyse, sogenannte Bilderkennungsverfahren, sind aus dem Stand der Technik bekannt. Damit werden die vorgegebenen, zu überprüfenden Streckeneinrichtungen auf den Bildaufnahmen erkannt und insbesondere eindeutig identifiziert.

Gemäß der Erfindung können bei der Auswertung der gespeicherten Bildaufnahmen, der Positionen, der Ausrichtungs- und Aufnahmeparameter, Schäden an den vorgegebenen, zu überprüfenden Streckeneinrichtungen erkannt werden. Die Bildaufnahmen werden somit auch im Hinblick auf Schäden der zu überprüfenden Streckeneinrichtungsobjekte untersucht und beim Erkennen von Schäden kann eine Meldung, natürlich mit den entsprechenden Daten zur schadhaften Streckeneinrichtung, also beispielsweise mit einer eindeutigen Identifikationskennung und/oder dessen Position, ausgegeben werden. Darüber hinaus kann auch eine Klassifizierung des Schadens vorgenommen werden. Entsprechend würde die ausgegebene Meldung die Art des Schadens umfassen. Darüber hinaus kann eine Visualisierung des Schadens auf den gespeicherten Bildaufnahmen erfolgen und entsprechend ausgegeben werden, beispielsweise durch Markieren des Schadens.

Die Verfahrensschritte zur Erkennung von vorgegebenen, zu überprüfenden Streckeneinrichtungen auf den Bildaufnahmen sowie zur Erkennung von Schäden an den vorgegebenen, zu überprüfenden Streckeneinrichtungen können mit demselben Algorithmus erfolgen. Neben der Erkennung von vorgegebenen, zu überprüfenden Streckeneinrichtungen auf den Bildaufnahmen kann auch das Erkennen von Schäden an den vorgegebenen, zu überprüfenden Streckeneinrichtungen mittels Verfahren der künstlichen Intelligenz erfolgen. Zur Schadenerkennung kann auch ein Vergleich mit Referenzbildaufnahmen ausgeführt werden. Die Referenzbildaufnahmen sind in einer Datenbank gespeichert.

Verfahrensschritt d. umfasst einen Vergleich der gespeicherten Bildaufnahmen und gegebenenfalls der Positionsdaten, der Ausrichtungs- und der Aufnahmeparameter mit einschlägigen Referenzbildaufnahmen und gegebenenfalls mit Referenzpositionsdaten sowie Referenzausrichtungs- und Referenzaufnahmeparametern, insbesondere aus einer Datenbank, zur Erkennung von Änderungen an den vorgegebenen, zu überprüfenden Streckeneinrichtungen oder an der Strecke.

Die Referenzbildaufnahmen zeigen die erkannte, insbesondere eindeutig identifizierte Streckeneinrichtung, oder eine entsprechend baugleiche, insbesondere identisch ausgebildete, zugehörige und schadenfreie Streckeneinrichtung. Der Vergleich mit den gespeicherten Bildaufnahmen dient zur Mustererkennung. Zur Mustererkennung können auch Bildaufnahmen aus vergangenen Überprüfungen mit den aktuellen, gespeicherten Bildaufnahmen übereinandergelegt und zusätzlich mit den Referenzbildaufnahmen aus der Datenbank verglichen werden. Bei signifikanten Änderungen in der Infrastruktur, zum Beispiel Rissbildung, Rost oder weiteren Defekten, können die Ergebnisse dem Anwender automatisch visualisiert und in aufgearbeiteter Form zur Verfügung gestellt werden. Diese automatische Auswertung und die entsprechende Visualisierung kann die Wartungsarbeitsschritte erheblich vereinfachen und beschleunigen.

Fürderhin umfasst die Auswertung der gespeicherten Bildaufnahmen, der Positionen, der Ausrichtungs- und Aufnahmeparameter gemäß Verfahrensschritt d. erfindungsgemäß eine Bewertung einer Qualität der Bildaufnahmen mittels eines vorgegebenen Algorithmus, insbesondere nach vorgegebenen Kriterien im Hinblick auf die vorgegebenen, zu überprüfenden Streckeneinrichtungen, insbesondere im Hinblick auf die erkannten, vorgegebenen und zu überprüfenden Streckeneinrichtungen.

Die Bewertung der Qualität der Bildaufnahmen kann entsprechend weitergebildet auch im Hinblick auf die erkannten Schäden an den vorgegebenen, zu überprüfenden Streckeneinrichtungen erfolgen.

Der Algorithmus, der auch die Schäden an den Streckeneinrichtungen erkennt, sucht in einer gespeicherten Bildaufnahme nach relevanten Objekten, insbesondere den zu überprüfenden Streckeneinrichtungen. Es werden Bildkoordinaten für diese Objekte in jeder Bildaufnahme erhalten. Zeigen diese Bildkoordinaten beispielsweise an, dass ein Objekt in der Aufnahme zu nahe am Bildrand liegt, nur teilweise dargestellt wird oder von anderen Elementen der Infrastruktur überdeckt wird, werden entsprechende Informationen zur Qualität der Bildaufnahmen erzeugt. Auch im Hinblick zur Pose, also zur räumlichen Lage bzw. Orientierung der Kamera zum Objekt, welche unmittelbar abhängig ist von der Position der Drohne und der Ausrichtung der Kamera, kann die Qualität der Bildaufnahmen bewertet werden und entsprechende Informationen erzeugt werden. Gleichermaßen kann die Belichtung, Schärfe oder Auflösung der Bildaufnahme bewertet werden. Diese Informationen wiederum können abhängig von den der Bildaufnahme zugrundeliegenden Aufnahmeparametern sein. Schärfe und Auflösung können auch abhängig sein vom Abstand der Kamera zum Objekt und somit wiederum von der Position der Drohne.

Die Qualität der Bildaufnahmen umfasst somit Informationen zur Erkennbarkeit der Streckeneinrichtungen und/oder zur Erkennbarkeit von Schäden an den Streckeneinrichtungen.

Diese Informationen können anschließend genutzt werden, um schon nach einer ersten Überprüfung eine Verbesserung der Routenplanung zu berechnen. Über diesen Schritt lässt sich innerhalb kürzester Zeit eine optimierte Routenplanung verwirklichen und kleine Ungereimtheiten der ersten, gegebenenfalls manuellen, Überprüfung eliminieren. Auch lässt sich so der Zeitraum für eine Erstellung einer Best Fit Route deutlich verkürzen.

Hierzu werden erfindungsgemäß Positionen, Ausrichtungs- und Aufnahmeparametern in Abhängigkeit von der Qualität der Bildaufnahmen mittels eines vorgegebenen Algorithmus ermittelt, insbesondere errechnet, und für weitere Überprüfungen, also für weitere, nachfolgende Bildaufnahmen, vorgegeben. Die, gegebenenfalls ursprünglich vorgegebenen, Positionen, Ausrichtungs- und Aufnahmeparameter können verworfen und/oder mittels der Informationen zur Qualität der Bildaufnahmen korrigiert und somit weitere, nachfolgende Bildaufnahmen verbessert werden.

In einer weiteren Weiterbildung des Verfahrens ist vorgesehen, dass Fokus-, Blenden- und/oder Brennweiteneinstellungen der Kamera als ermittelte Aufnahmeparameter der Kamera in Abhängigkeit von der Qualität der Bildaufnahmen gemäß Verfahrensschritt e. vorzugeben.

Auch Tageszeiten der Bildaufnahmen können gemäß Verfahrensschritt e. vorgegeben werden.

Als Beispiel hierfür kann folgendes angesehen werden. Ein Objekt, insbesondere eine zu überprüfende Streckeneinrichtung, wird immer wieder fälschlich interpretiert, da es im Bereich eines Schlagschattens liegt. Bei der Überprüfung der Daten fällt auf, dass dieses Objekt immer zur Mittagszeit aufgenommen wurde. Nun kann die Routenplanung so angepasst werden, dass bei kommenden Bildaufnahmen das Objekt aus anderen Richtungen fotografiert wird oder ein Zeitpunkt zur Bildaufnahme gewählt wird, bei dem der Sonnenstand keinen Schlagschatten auf das Objekt wirft.

Gemäß einer weiteren Weiterbildung der Erfindung wird die Drohne bei einer ersten Initialüberprüfung der vorgegebenen Streckeneinrichtungen der Strecke manuell gesteuert und ausgerichtet, insbesondere geplant und durchgeführt von geschultem Personal.

Auch bei der manuellen Initialüberprüfung wird die Drohne entlang einer vorgegebenen Route, insbesondere entlang der Strecke, gesteuert. Die Aufnahmeparameter können ebenfalls manuell vorgegeben werden oder sie werden automatisch eingestellt, wie aus dem Stand der Technik bereits bekannt - als Beispiel sei hier eine Autofokusfunktion genannt. Die Bildaufnahmen können bei der Initialüberprüfung manuell ausgelöst werden oder sie werden bei Erreichen der vorgegebenen Position und Ausrichtung automatisch ausgelöst.

Die Verfahrensschritte d. und e. werden zumindest teilautomatisiert ausgeführt. Die Bildaufnahmen der Initialüberprüfung können als Trainingsdaten verwendet werden. Dazu könnten Objekte in den Bildaufnahmen manuell annotiert werden. Dies ergibt den Trainingsdatensatz mit Bildaufnahmen und den zu lernenden Annotationen. Das System lernt dann selbstständig ein Modell mit den Parametern der annotierten Objekte. Dieses Modell kann nun verwendet werden, um Objekte in nachfolgenden, weiteren Bildaufnahmen automatisch zu identifizieren. Die Parameter in diesem Modell bestimmen die typischen visuellen Eigenschaften der zu klassifizierenden Objekte auf unterschiedlichsten Abstraktionsebenen.

Bei anschließend durchgeführten, weiteren Überprüfungen können dann sämtliche Verfahrensschritte a. bis e. automatisch bzw. vollautomatisiert ausgeführt werden. Basis bilden die in Abhängigkeit von der Qualität der gespeicherten Bildaufnahmen, der Positionen, der Ausrichtungs- und Aufnahmeparameter der Initialüberprüfung ermittelten Positionen, Ausrichtungs- und Aufnahmeparametern.

Der Begriff der Streckeneinrichtungen im Sinne dieser Erfindung umfasst neben Einrichtungen der Infrastruktur der Strecke auch unmittelbar an die Strecke angrenzende Bauwerke oder Vegetation. Letztere kann auch in die Strecke überragen.

Die gemäß der Erfindung automatisierte Überprüfung der Streckeneinrichtungen ist dahingehend verbessert, dass sie deutlich vereinfacht ist und eine signifikant geringere Fehleranfälligkeit aufweist. Damit gehen Kosteneinsparungen einher.

Die Erfindung ermöglicht eine zustandsorientierte Instandhaltung, bis hin zur Vorhersage des Abnutzungsverhaltens. Letzteres wird auch als predictive health management (PHM) bezeichnet. Eine automatische bzw. automatisierte Befliegung mit unbemannten Luftfahrzeugen kann zu einer erheblichen Reduzierung der Kosten bei gleichzeitiger Verbesserung der Diagnosegüte beitragen.

Neben der Reduzierung des Personalaufwandes vor Ort wird die Zeitdauer von Streckensperrungen minimiert, da die Befliegungen der Strecke wesentlich kürzer ausfallen als herkömmliche Begehungen zur Sichtprüfung. Zudem können die schwer zugänglichen Streckeneinrichtungen aus nahezu beliebigen Blickwinkeln aufgenommen werden.

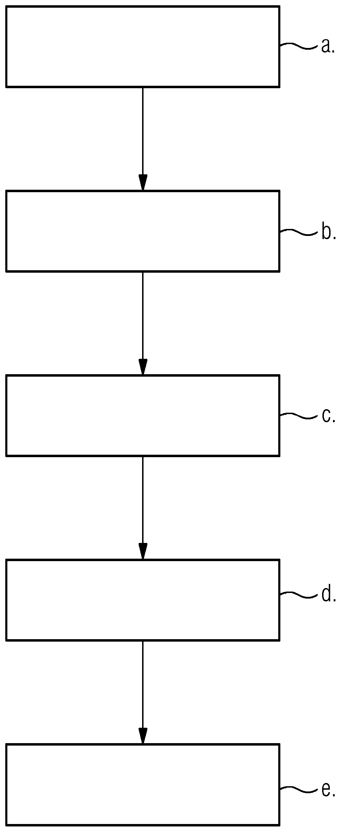

Die Erfindung lässt zahlreiche Ausführungsformen zu. Sie wird anhand der nachfolgenden Figur näher erläutert. In der Figur ist ein Flussdiagramm eines Ausgestaltungsbeispiels des erfindungsgemäßen Verfahrens schematisch dargestellt. Es wird ein Multikopter mit hochauflösendem Kamerasystem, GNSS-Empfänger und inertialer Messeinheit als Drohne eingesetzt.

In einem ersten Verfahrensschritt a. wird eine erste Befliegung der Strecke und damit eine Initialüberprüfung der vorgegebenen, zu überprüfenden Streckeneinrichtungen, beispielsweise von Isolatoren einer Oberleitung einer Eisenbahnstrecke, geplant und manuell von geschultem Personal ausgeführt. Dazu wird eine Wegstrecke mit Wegpunkten für die Drohne ausgearbeitet und beflogen. An vorgegebenen Positionen werden in vorgegebener Ausrichtung des Kamerasystems und mit vorgegebenen Aufnahmeparametern Bildaufnahmen erzeugt (Schritt b.) und gespeichert (Schritt c.). Die gespeicherten Daten - die nun vorliegenden Bildaufnahmen aus dem manuellen Initialflug inklusive den entsprechenden GNSS-Daten (Globales Navigationssatellitensystem) und IMU-Daten (Inertiale Messeinheit) zu jeder Bildaufnahme - werden in Schritt d. ausgewertet, beispielsweise mittels eines Computers.

Ziel der Auswertung ist eine automatisierte Anpassung der Flugplanung. Die mit Sensorik ausgestatteten Luftfahrzeuge sollen in vordefinierten Abständen - zeitlich und gegebenenfalls auch räumlich - später selbstständig die Bahninfrastruktur abfliegen und Daten aufnehmen. Anschließend werden die Daten automatisch auf die zu untersuchenden Elemente überprüft.

Grundlage für die automatisierte Anpassung, mittels Software, für Folgebefliegungen bilden die Bildaufnahmen aus dem manuellen Initialflug inklusive den entsprechenden GNSS-Daten (Globales Navigationssatellitensystem) und IMU-Daten (Inertiale Messeinheit) zu jeder Bildaufnahme. In der zugrundeliegenden rechnergestützten Auswertung erkennt eine Software automatisch Schäden oder sich anbahnende Schäden an den zu überprüfenden Streckeneinrichtungen, hier den Isolatoren oder auch an Gewichten oder am einem Kettenwerk einer Oberleitung. Die Bildaufnahmen der ersten Befliegung werden auch ohne eine Beurteilung der Schäden genutzt, um mittels Software gestützter Auswertung eine Aussage über die Qualität der Befliegung zu geben.

Der Algorithmus, der auch die Schäden and der Infrastruktur erkennt, sucht im Bild nach den relevanten Objekten. Somit erhält man Bildkoordinaten für diese Objekte in jedem Bild.

Zeigen diese Bildkoordinaten an, dass ein Objekt in der Aufnahme zu nahe am Bildrand liegt, nur teilweise dargestellt wird oder von anderen Elementen der Infrastrukturen überdeckt wird, so kann diese Information genutzt werden, um schon nach der ersten Befliegung eine Verbesserung der Flugplanung zu berechnen. Über diesen Schritt e. lässt sich innerhalb kürzester Zeit eine optimierte Flugplanung verwirklichen und kleine Ungereimtheiten der manuellen Befliegung eliminieren. Auch lässt sich so der Zeitraum für eine Erstellung der Best Fit Befliegung deutlich verkürzen.

Die erste Wegstrecke mit den Positionen der ersten Befliegung, basierend auf Kartenmaterial wird als Grundlage hinterlegt. Diese kann nach der Befliegung und Berechnung der Trajektorie korrigiert werden und bildet somit die Planungsgrundlage für weitere Befliegungen. Parallel werden die Bilddaten in Hinblick auf Schäden oder die Anpassung der zu befliegenden Strecke automatisiert untersucht und die erste Befliegung korrigiert, um eine erneute Befliegung zu starten. Werden Schäden festgestellt, so speichert die Software die Positionsinformationen des Bildes in einer Tabelle ab. Diese Tabelle wird im nächsten Schritt an das zugrunde liegende Flight Management System übergeben, welche basierend auf diesen Daten nur noch die aufgelisteten Positionen nutzt, um eine neue Wegstrecke für die folgende Befliegung und Ausrichtung der Drohne zu berechnen und an die Drohne für Folgeflüge übergibt.

Mit dieser beschriebenen Vorgehensweise lässt sich, nach einer ersten Befliegung, eine Nacharbeitung seitens eines menschlichen Operators eliminieren und es findet eine direkte Optimierung der nächsten Befliegung statt. Zusätzlich wird die Menge and aufzunehmenden Bilder minimiert und es kann eine Konzentration auf die auffälligen Ereignisse stattfinden.

Bei Wiederholungsmessungen zur Erkennung von Schadstellen an Isolatoren, Gewichten und dem Kettenwerk einer Oberleitung mittels Drohnenbefliegungen muss eine Drohne immer die gleiche Wegstrecke abfliegen, um eine qualifizierte Aussage über Veränderungen zu treffen. Zur Aufnahme und späteren Auswertung liegt Bildmaterial vor, dass von der Drohne während jeder Befliegung aufgezeichnet wird. Um dieses Bildmaterial über einen Beobachtungszeitraum von mehreren Monaten oder auch Jahren automatisiert auszuwerten, sollten die Bilder von der gleichen Position und unter dem gleichen Winkel aus aufgenommen werden. Ferner sollten bei erneuter Befliegung nur Positionen angeflogen werden, die eine Überwachung schon erkannter Schäden aufzeigen. Eine allgemeine Überprüfung wird somit nur in einem deutlich längeren Zyklus notwendig und es besteht die Möglichkeit sich auf die ersten Anzeichen von Schadensfällen zu konzentrieren und diese in kürzeren Zyklen zu beobachten.

Nach Abschluss des Schritts e. wird also das Verfahren bei Schritt a. erneut gestartet, doch mit dem Unterschied, dass nun die Steuerung der Drohne automatisch erfolgt.

Zur automatischen Erkennung und Lokalisierung von Defekten und Veränderungen wird in Schritt d. Mustererkennungssoftware, insbesondere ein Detektionsalgorithmus, insbesondere Verfahren der künstlichen Intelligenz, beispielsweise neuronale Netze, genutzt.

Bei der Objektdetektion sollen diejenigen Bildregionen identifiziert werden, in denen sich Isolatoren befinden. Aus einer automatischen Befliegung lassen sich damit diejenigen Bilder aussortieren, in denen keine Isolatoren zu sehen sind. Zudem genügt es, für weitere Verarbeitungsschritte nur die entsprechenden Bildregionen zu verwenden, womit sich die weiter zu prozessierende Datenmenge reduziert. Dazu können zunächst in einem gegebenen Bilddatensatz Objekte in den Bildern manuell annotiert werden. Dies ergibt den Trainingsdatensatz mit Bildern und den zu lernenden Annotationen. Das System lernt dann selbstständig ein Modell mit den Parametern der annotierten Objekte. Dieses Modell kann nun verwendet werden, um Objekte in neuen Bildern automatisch zu identifizieren. Die Parameter in diesem Modell bestimmen die typischen visuellen Eigenschaften der zu klassifizierenden Objekte auf unterschiedlichsten Abstraktionsebenen. Sie können z.B. primitive Eigenschaften wie Kanten oder Farben sowie auch weitaus komplexere Formen und Muster enthalten, beispielsweise wird ein sogenannter Single Shot Detector verwendet, der mehrere Objekte in einem Bild gleichzeitig erkennen kann. Zur Bewertung der Trainingsdaten dienen die in der Statistik gebräuchlichen Klassifikationsmaße Genauigkeit und Trefferquote.

Zur Mustererkennung werden Bildaufnahmen aus vergangenen Wartungsflügen mit den aktuellen Aufnahmen übereinandergelegt und zusätzlich mit den Bildern aus einer Referenzdatenbank verglichen.

Bei signifikanten Änderungen in der Infrastruktur - z. B. Rissbildung, Rost und weitere Defekte - werden die Ergebnisse dem Anwender automatisch visualisiert und in aufgearbeiteter Form zur Verfügung gestellt. Diese automatische Auswertung und die entsprechende Visualisierung würden die Wartungsarbeitsschritte erheblich vereinfachen und beschleunigen.

Zur Bewertung der Qualität der Bildaufnahmen lasen sich die georeferenzierten Bild- und Zustandsdaten einzelner Objekte mit den zu den Bildaufnahmen gehörenden Positions- und Ausrichtungsdaten automatisiert mit Datenbanken abgleichen.

Zur Georeferenzierung von erkannten Objekten werden Bild- und Videomaterial aus unterschiedlichen Ansichten auf die Objekte gesammelt. Zudem erfolgt mit Satellitennavigation die Zuordnung hochgenauer Positionsdaten zu den jeweiligen Einzelbildern, was die Bewertung des Objektzustands aus verschiedenen Perspektiven ermöglicht, aber auch eine Rekonstruktion von 3D-Objektdaten. Mittels photogrammetrischer Verfahren werden die Aufnahmepositionen in genaue Relation zueinander gebracht und die 3D-Position der jeweiligen Objekte trianguliert. Hierdurch ist eine eindeutige Identifikation von Objekten bzw. der zu überprüfenden Streckeneinrichtungen ermöglicht.

Die automatisierte Planung der nächsten Befliegung umfasst das Vorgeben der Route unter Vorgabe von Positions- und Ausrichtungsdaten sowie gegebenenfalls der Aufnahmeparameter in Abhängigkeit von der Aufnahmequalität, insbesondere indem die Daten der vorhergehenden Befliegungen korrigiert werden.

Die Anpassung der Aufnahmeparameter betrifft insbesondere den Fokus der Kamera. Weiter können die Aufnahmeparameter eine Brennweite der Aufnahmeeinheit umfassen. Ferner kann der zumindest eine Aufnahmeparameter eine Blendenzahl der Aufnahmeeinheit umfassen. Außerdem kann der zumindest eine Aufnahmeparameter eine Apertur der Aufnahmeeinheit umfassen. Der zumindest eine Aufnahmeparameter kann außerdem einen Winkel in dem realen Bild und/oder eine Abmessung in dem realen Bild umfassen.

Die Vorteile sind eine schnelle und automatisierte Umsetzung eines reellen Problems. Hierdurch kommt es zu einer schnelleren und somit kosteneffektiveren Arbeitsweise. Dienstreisezeiten von Service-Mitarbeiter und somit auch Arbeitsstunden (Kosten) werden deutlich verringert. Darauf bezugnehmend könnte der Anteil des Service am kompletten Produkt reduziert werden.

Die automatisierte Verbesserung der Flugplanung betrachtet alle aufgezeichneten Bilder in wenigen Sekunden pro Bild. Hingegen würde ein menschlicher Operator hierzu einige Minuten oder länger pro Bild brauchen und müsste dann noch aus den zugrundeliegenden Geodaten händisch die Flugplanung anpassen. Zusätzlich lassen sich Fehler in der Flugplanung einfacher erkennen und verfolgen. Auch würde eine falsche Interpretation der Bilddaten durch den menschlichen Operator ein weiteres Fehlerpotential darstellen. Ferner werden durch die mehrfachen Befliegungen immer weitere Bilddaten gesammelt und stehen einer automatischen Flugplanung somit zur Verfügung. Hierbei kann auch eine Fokusanpassung erfolgen, wenn der Nutzer neue Assets mit aufnahmen will und diese in den Bildern erkennt und der automatischen Auswertung übergibt. Daher lässt sich auch die automatisierte Flugplanung schnell an neue Aufträge seitens des Betreibers anpassen und erhöht die Flexibilität der Erfindung.

Ein weiterer Vorteil ist, dass eine Historie des Zustands aufgebaut wird. Digitalisierung der Dokumentation, eindeutige Nachverfolgung.

## Patentansprüche

1. Verfahren zur Überprüfung von vorgegebenen Streckeneinrichtungen einer Strecke mittels Bildaufnahmen einer Drohne, umfassend folgende Verfahrensschritte:
a. Steuern der Drohne entlang einer vorgegebenen Route zu vorgegebenen Positionen und Ausrichten einer Kamera der Drohne nach vorgegebenen Ausrichtungsparametern;
b. Erzeugen von Bildaufnahmen von den vorgegebenen, zu überprüfenden Streckeneinrichtungen mit vorgegebenen Aufnahmeparametern;
c. Speichern der Bildaufnahmen, der Positionsdaten, der Ausrichtungs- und der Aufnahmeparameter;
d. Auswerten der gespeicherten Bildaufnahmen, der Positionen, der Ausrichtungs- und Aufnahmeparameter, umfassend:
- Erkennen von vorgegebenen, zu überprüfenden Streckeneinrichtungen;
- Rekonstruktion von 3D-Objektdaten zu den vorgegebenen, zu überprüfenden Streckeneinrichtungen aus mehreren gespeicherten Bildaufnahmen, Positionen und Ausrichtungsparametern zur eindeutigen Identifikation der vorgegebenen, zu überprüfenden Streckeneinrichtungen mittels photogrammetrischer Verfahren;
- Bewerten einer Qualität der Bildaufnahmen umfassend Informationen zur Erkennbarkeit der Streckeneinrichtungen mittels eines vorgegebenen Algorithmus;
- Ermitteln von Positionen, Ausrichtungs- und Aufnahmeparametern in Abhängigkeit von der Qualität der Bildaufnahmen mittels eines vorgegebenen Algorithmus;
e. Vorgeben der ermittelten Positionen, Ausrichtungs- und Aufnahmeparameter in Abhängigkeit von der Qualität der Bildaufnahmen für weitere Überprüfungen, also für weitere, nachfolgende Bildaufnahmen,
**dadurch gekennzeichnet, dass** das Auswerten der gespeicherten Bildaufnahmen, der Positionen, der Ausrichtungs- und Aufnahmeparameter gemäß Verfahrensschritt d. umfasst:
- Vergleichen der gespeicherten Bildaufnahmen mit einschlägigen Referenzbildaufnahmen zur Erkennung von Änderungen an den Streckeneinrichtungen oder an der Strecke;
- Erkennen von Schäden an den vorgegebenen, zu überprüfenden Streckeneinrichtungen,
wobei Positionen und Ausrichtungsparameter in Abhängigkeit von erkannten Schäden an den vorgegebenen, zu überprüfenden Streckeneinrichtungen vorgegeben werden.

2. Verfahren nach Anspruch 1, **dadurch gekennzeichnet, dass** das Vorgeben von Aufnahmeparametern der Kamera in Abhängigkeit von der Qualität der Bildaufnahmen gemäß Verfahrensschritt e. umfasst:
- Vorgeben von Fokus-, Blenden- und/oder Brennweiteneinstellungen der Kamera.

3. Verfahren nach einem der Ansprüche 1 oder 2, **dadurch gekennzeichnet, dass** das Vorgeben von Aufnahmeparametern der Kamera in Abhängigkeit von der Qualität der Bildaufnahmen gemäß Verfahrensschritt e. umfasst:
- Vorgeben von Tageszeiten der Bildaufnahmen.

4. Verfahren nach einem der Ansprüche 1 bis 3, **dadurch gekennzeichnet, dass** die Drohne bei einer ersten Initialüberprüfung der vorgegebenen Streckeneinrichtungen der Strecke manuell gesteuert und ausgerichtet wird.

5. Computerprogrammprodukt umfassend Befehle, die bei der Ausführung des Programms durch ein geeignetes mobiles Endgerät dieses veranlassen, das Verfahren nach einem der Ansprüche 1 bis 4 auszuführen.

6. Datenträger, auf dem das Computerprogrammprodukt nach Anspruch 5 gespeichert ist.

## Claims

1. Method for inspecting predetermined route equipment of a route by means of image recordings of a drone, comprising the following method steps:
a. steering the drone along a predetermined route to predetermined positions and aligning a camera of the drone according to predetermined alignment parameters;
b. generating image recordings of the predetermined route equipment to be inspected with predetermined recording parameters;
c. storing the image recordings, the position data, the alignment parameters and the recording parameters;
d. evaluating the stored image recordings, the positions, the alignment parameters and recording parameters, comprising:
- identifying predetermined route equipment to be inspected;
- reconstructing 3D object data relating to the predetermined route equipment to be inspected from a number of stored image recordings, positions and alignment parameters for the unique identification of the predetermined route equipment to be inspected by means of photogrammetric methods;
- evaluating a quality of the image recordings comprising information relating to the identifiability of the route equipment by means of a predetermined algorithm;
- determining positions, alignment parameters and recording parameters as a function of the quality of the image recordings by means of a predetermined algorithm;
e. predetermining the determined positions, alignment parameters and recording parameters as a function of the quality of the image recordings for further inspections, in other words for further, subsequent image recordings,
**characterised in that** the evaluation of the stored image recordings, the positions, the alignment parameters and recording parameters according to method step d. comprises:
- comparing the stored image recordings with relevant reference image recordings for identifying changes to the route equipment or to the route;
- identifying damage to the predetermined route equipment to be inspected,
wherein positions and alignment parameters are predetermined as a function of identified damage to the predetermined route equipment to be inspected.

2. Method according to claim 1, **characterised in that** the predetermining of recording parameters of the camera as a function of the quality of the image recordings according to method step e. comprises:
- predetermining focus settings, aperture settings and/or focal length settings of the camera.

3. Method according to one of claims 1 or 2, **characterised in that** the predetermining of recording parameters of the camera as a function of the quality of the image recordings according to method step e. comprises:
- predetermining times of day of the image recordings.

4. Method according to one of claims 1 to 3, **characterised in that** the drone is steered and aligned manually during a first initial inspection of the predetermined route equipment of the route.

5. Computer program product comprising commands, which, when the program is executed by a suitable mobile terminal, cause it to execute the method according to one of claims 1 to 4.

6. Data carrier on which the computer program product according to claim 5 is stored.

## Revendications

1. Procédé de contrôle de dispositifs de voie donnés à l'avance d'une voie au moyen d'enregistrement d'image d'un drone, comprenant les stades de procédé suivants :
a. commande du drone suivant un itinéraire donné à l'avance vers des positions données à l'avance et orientation d'un appareil photographique du drone suivant des paramètres d'orientation donnés à l'avance ;
b. production avec des paramètres d'enregistrement donnés à l'avance d'enregistrements d'image des dispositifs de voie donnés à l'avance à contrôler ;
c. mise en mémoire des enregistrements d'image, des données de position, des paramètres d'orientation et d'enregistrement ;
d. exploitation des enregistrements d'image mis en mémoire, des positions, des paramètres d'orientation et d'enregistrement, comprenant :
- identification de dispositifs de voie donnés à l'avance à contrôler ;
- reconstruction de données d'objet en 3D se rapportant aux dispositifs de voie donnés à l'avance à contrôler, à partir de plusieurs enregistrements d'image, positions et paramètres d'orientation mis en mémoire, pour l'identification univoque des dispositifs de voie donnés à l'avance à contrôler au moyen d'un procédé photogrammétrique ;
- évaluation, au moyen d'un algorithme donné à l'avance, d'une qualité des enregistrements d'image comprenant des informations sur la possibilité d'identifier des dispositifs de voie ;
- détermination, au moyen d'un algorithme donné à l'avance, de positions, de paramètres d'orientation et d'enregistrement en fonction de la qualité des enregistrements d'image ;
e. donner à l'avance des positions, paramètres d'orientation et enregistrements déterminés en fonction de la qualité des enregistrements d'image pour d'autres contrôles, donc pour d'autres enregistrements d'image suivants,
**caractérisé en ce que** l'évaluation des enregistrements d'image, des positions, des paramètres d'orientation et d'enregistrements mis en mémoire suivant le stade d. du procédé comprend
- comparaison des enregistrements d'image mis en mémoire à des enregistrements d'image de référence s'y rapportant, pour l'identification de modifications sur les dispositifs de voie ou sur la voie ;
- identification de dommages sur les dispositifs de voie donnés à l'avance à contrôler,
dans lequel on donne à l'avance des positions et des paramètres d'orientation en fonction des dommages identifiés sur les dispositifs de voie donnés l'avance à contrôler.

2. Procédé suivant la revendication 1, **caractérisé en ce que** donner à l'avance les paramètres d'enregistrements de l'appareil photographique en fonction de la qualité des enregistrements d'image suivant le stade a. du procédé comprend :
- donner à l'avance des réglages de foyer, de diaphragme et/ou de distance focale de l'appareil photographique.

3. Procédé suivant l'une des revendications 1 ou 2, **caractérisé en ce que** donner à l'avance des paramètres d'enregistrements de l'appareil photographique en fonction de la qualité des enregistrements d'image suivant la stade e. comprend :
- donner à l'avance des heures du jour des enregistrements d'image.

4. Procédé suivant l'une des revendications 1 à 3, **caractérisé en ce que** l'on commande manuellement et dirige le drone, lors d'un premier contrôle initial des dispositifs de voie donnés à l'avance de la voie.

5. Produit de programme d'ordinateur comprenant des instructions qui, lors de l'exécution du programme par un terminal mobile approprié, font que celui-ci exécute le procédé suivant l'une des revendications 1 à 4.

6. Support de données, sur lequel est mis en mémoire le produit de programme d'ordinateur suivant la revendication 5.
